# EUROPEAN PATENT APPLICATION

(11) **EP 4 557 748 A1**
(43) Date of publication of application: **21.05.2025**
(21) Application number: 23852317.9
(22) Date of filing: 19.07.2023
(51) Int. Cl.: H04N 21/258, G06F 3/01, H04N 7/15, H04N 21/431

(54) **INFORMATION PROCESSING DEVICE, INFORMATION PROCESSING METHOD, AND PROGRAM**

(30) Priority: 09.08.2022 JP 2022127457
(71) Applicant: Sony Group Corporation, Tokyo 108-0075 (JP)
(72) Inventor: YOKOYAMA, Ryo, Tokyo 108-0075 (JP)
(74) Representative: D Young & Co LLP
(86) International application number: PCT/JP2023/026345
(87) International publication number: WO 2024/034336

(57) **Abstract**

An information processing apparatus includes a rendering unit and a reproduction unit. The rendering unit generates, based on sensor information of a current time acquired from a transmitter, rendering data of a subsequent scene expected to occur in a virtual space of a receiver at a subsequent time after the current time The reproduction unit reproduces the rendering data in the virtual space of the receiver at the subsequent time.

## Description

### Field

The present invention relates to an information processing apparatus, an information processing method, and a program.

### Background

There is an increasing demand for remote communication. It has become possible to communicate with a remote partner on an XR space using floor-mounted tactile sense presentation devices and wearable tactile sense presentation devices like gloves or clothes.

### Citation List

### Patent Literature

Patent Literature 1: JP 2015-111417 A

### Summary

### Technical Problem

In a case where communication is performed with a remote partner, there is a case where a deviation occurs in reproduction timing due to a communication delay or the like. For example, although an image and a sound can be allowed even if there is a slight delay, in a case where it is important that tactile sense presentation timings are the same as each other, such as when a fingertip of the partner is directly touched on VR, there is a possibility that discomfort occurs due to a communication delay.

Accordingly, the present disclosure proposes an information processing apparatus, an information processing method, and a program capable of suppressing a deviation in reproduction timing on the receiver side.

### Solution to Problem

According to the present disclosure, an information processing apparatus is provided that comprises: a rendering unit that generates, based on sensor information of a current time acquired from a transmitter, rendering data of a subsequent scene expected to occur in a virtual space of a receiver at a subsequent time after the current time; and a reproduction unit that reproduces the rendering data in the virtual space of the receiver at the subsequent time. According to the present disclosure, an information processing method in which an information process of the information processing apparatus is executed by a computer, and a program for causing the computer to execute the information process of the information processing apparatus, are provided.

### Brief Description of Drawings

FIG. 1 is a diagram illustrating a remote communication system according to a first embodiment.
FIG. 2 is a diagram illustrating an example of a haptic device.
FIG. 3 is a diagram illustrating an example of the haptic device.
FIG. 4 is a diagram illustrating an example of an interaction using a ripple.
FIG. 5 is a diagram illustrating an example of processing operations of a transmitter and a receiver.
FIG. 6 is a diagram illustrating an example of the processing operations of the transmitter and the receiver.
FIG. 7 is a diagram for comparing a conventional method and a method of the present disclosure.
FIG. 8 is a diagram for comparing the conventional method and the method of the present disclosure.
FIG. 9 is a diagram illustrating an example of a processing flow of the receiver.
FIG. 10 is an explanatory diagram of a first modification.
FIG. 11 is an explanatory diagram of a second modification.
FIG. 12 is an explanatory diagram of a third modification.
FIG. 13 is an explanatory diagram of a fourth modification.
FIG. 14 is a diagram illustrating a remote communication system according to a second embodiment.
FIG. 15 is an explanatory diagram of processing of generating and reproducing rendering data.
FIG. 16 is an explanatory diagram of the processing of generating and reproducing rendering data.
FIG. 17 is an explanatory diagram of a fifth modification.
FIG. 18 is a diagram illustrating an example of a hardware configuration of an information processing apparatus.

### Description of Embodiments

Hereinafter, embodiments of the present disclosure will be described in detail based on the drawings. In the following embodiments, the same parts are denoted by the same reference numerals, and redundant description is omitted.

Note that the description will be given in the following order.
[1. First Embodiment]
   [1-1. Configuration of Remote Communication System]
   [1-2. Generation and Reproduction of Rendering Data]
   [1-3. Information Processing Method]
   [1-4. Effects]
   [1-5. First Modification]
   [1-6. Second Modification]
   [1-7. Third Modification]
   [1-8. Fourth Modification]
[2. Second Embodiment]
   [2-1. Generation and Reproduction of Rendering Data]
   [2-2. Fifth Modification]
[3. Hardware Configuration Example]

### [1. First Embodiment]

### [1-1. Configuration of Remote Communication System]

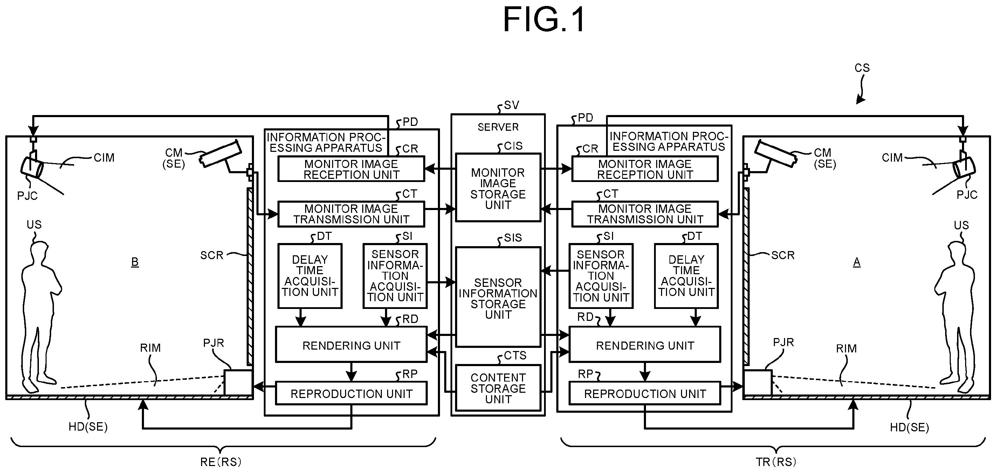

FIG. 1 is a diagram illustrating a remote communication system CS according to a first embodiment.

The remote communication system CS includes a server SV and a plurality of reproduction systems RS. The plurality of reproduction systems RS are connected via the server SV. The reproduction system RS presents a virtual space to a user US using reproduction data regarding an image, a sound, and a tactile sense. The user US communicates with another user US via the virtual space.

The reproduction system RS includes a camera CM, a projector PJC, a screen SCR, a projector PJR, a haptic device HD, a sensor unit SE, and an information processing apparatus PD.

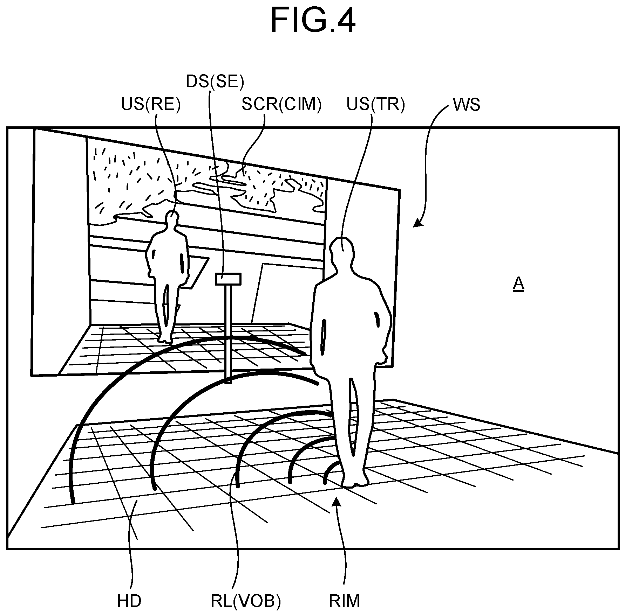

The information processing apparatus PD generates rendering data of various scenes reproduced by the reproduction system RS. The rendering data includes image, sound, and tactile data. The sensor unit SE acquires sensor information necessary for rendering. For example, the sensor unit SE includes a camera CM, a haptic device HD, and a distance sensor DS (see FIG. 4). The sensor unit SE outputs information detected by each device as sensor information.

The camera CM captures an image of a space in a room where the user US is. The camera CM outputs the captured image of the room as a monitor image CIM. The monitor image CIM is transmitted to another reproduction system RS via the server SV. The projector PJC displays the monitor image CIM of another reproduction system RS received via the server SV on the screen SCR.

The projector PJR reproduces rendering data regarding the image and the sound. In the example of FIG. 1, the rendering data (rendering image RIM) regarding the image is reproduced on a floor surface via the projector PJR. In each reproduction system RS, the rendering image RIM regarding the same content is reproduced. The monitor image CIM and the rendering image RIM are presented as one image extending from the floor surface to the screen SCR. The user US can feel as if the virtual space of another reproduction system RS spreads on the other side of the screen SCR.

In the example of FIG. 1, the user US of one reproduction system RS communicates with the user US of another reproduction system RS via a network such as the Internet. Each reproduction system RS generates rendering data using the sensor information acquired by the sensor unit SE and content information acquired from the server SV (content storage unit CTS). The sensor information is also transmitted to another reproduction system RS via the server SV, and is used for rendering processing of another reproduction system RS.

Hereinafter, the reproduction system RS that transmits the sensor information to another reproduction system RS via the server SV is described as a transmitter TR. A virtual space presented by the transmitter TR is described as a virtual space A. The reproduction system RS that receives the sensor information of another reproduction system RS from the server SV is described as a receiver RE. A virtual space presented by the receiver RE is described as a virtual space B. Each reproduction system RS can function as both the transmitter TR and the receiver RE. A common virtual object VOB is presented in the virtual space A and the virtual space B. The user US on the transmitter TR side and the user US on the receiver RE side can interact via the virtual object VOB.

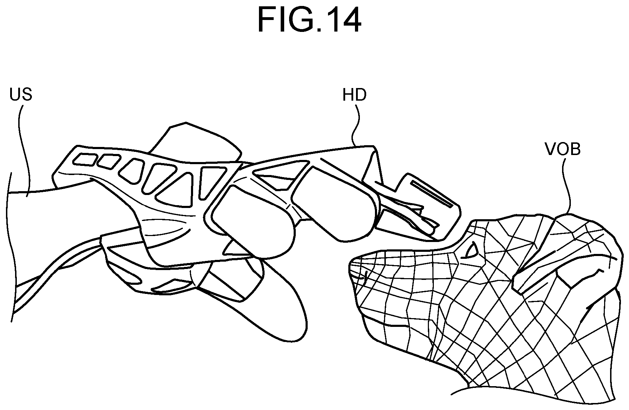

The transmitter TR transmits the monitor image CIM captured by the camera CM and the sensor information of the current time acquired by the sensor unit SE to the receiver RE via the server SV. The sensor information includes various types of information used for rendering a reproduced scene. For example, the sensor information includes information regarding an interaction between the user US and the virtual object VOB (see FIGS. 4 and 14). The time information may be acquired from a clock in a computer of the transmitter TR or may be acquired from a clock in the server SV.

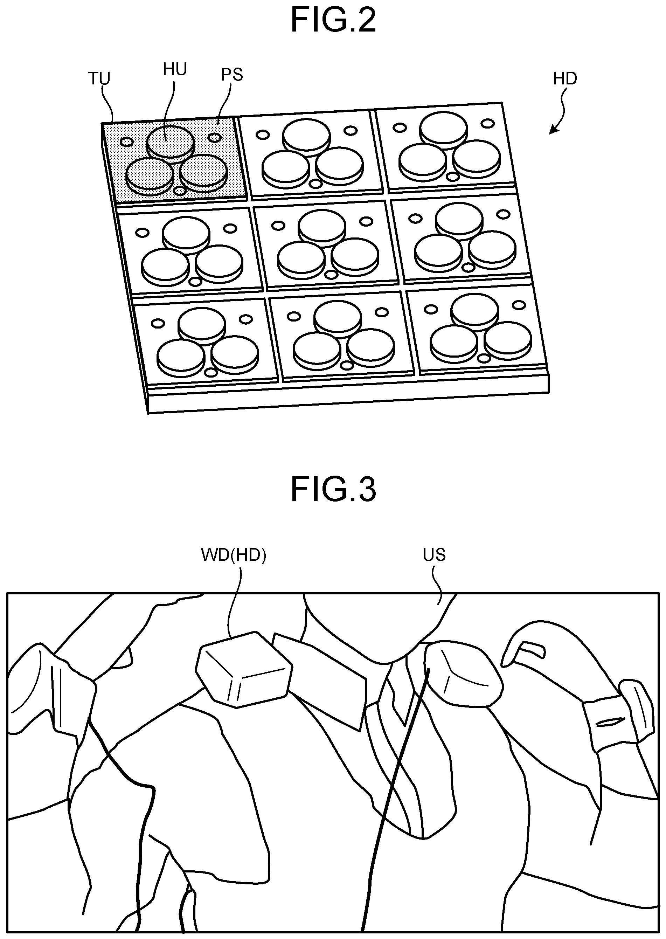

FIGS. 2 and 3 are diagrams illustrating an example of the haptic device HD.

The haptic device HD has a tactile sense presentation function and a pressure-sensitive detection function. In the example of FIG. 2, the haptic device HD is configured as a plurality of tile units TU laid on the floor surface. The tile unit TU includes a pressure-sensitive sensor PS and a plurality of haptic units HU. A surface of the tile unit TU functions as a screen for displaying an image (rendering image RIM) of the projector PJR.

The haptic device HD detects the stepping position and strength of the user US as sensor information by using a plurality of two-dimensionally arranged pressure-sensitive sensors PS. The detected sensor information is used to generate image, sound, and tactile rendering data. The haptic device HD reproduces rendering data regarding the tactile sense using the haptic unit HU near the stepping position.

Note that when an LED display is built in the tile unit TU, the rendering image RIM can be displayed directly on the LED display. In this case, the projector PJR can be omitted. When the haptic unit HU is configured as a broadband actuator, it is also possible to cause the haptic unit HU to function as a sound element.

In the example of FIG. 3, the haptic device HD is configured as a wearable device WD. The pressure-sensitive sensor PS and the haptic unit HU are built in clothes. The user US can input operation information by touching the pressure-sensitive sensor PS built in the clothes. The haptic device HD uses the haptic unit HU built in the clothes to reproduce rendering data regarding the tactile sense.

Returning to FIG. 1, the information processing apparatus PD includes a monitor image transmission unit CT, a monitor image reception unit CR, a sensor information acquisition unit SI, a delay time acquisition unit DT, a rendering unit RD, and a reproduction unit RP.

The monitor image transmission unit CT acquires the monitor image CIM from the camera CA and transmits the monitor image CIM to the server SV. The server SV stores the monitor image CIM received from the monitor image transmission unit CT in a monitor image storage unit CIS. The monitor image reception unit CR receives the monitor image CIM of another reproduction system RS from the monitor image storage unit CIS, and supplies the monitor image CIM to the projector PJC.

The sensor information acquisition unit SI acquires sensor information from the sensor unit SE and supplies the sensor information to the rendering unit RD. The sensor information acquisition unit SI transmits the sensor information to the server SV. The server SV stores the sensor information received from the sensor information acquisition unit SI in a sensor information storage unit SIS.

The delay time acquisition unit DT acquires a communication delay time between the transmitter TR and the receiver RE. The communication delay time means a time required for communication. For example, the communication delay time is 500 ms. The communication delay time can be measured using a known measurement device. The communication delay time may be different between an upstream direction (direction toward the receiver RE from the transmitter TR) and a downstream direction (direction toward the transmitter TR from the receiver RE). However, in the present embodiment, for the sake of simplicity, it is assumed that the communication delay time in the upstream direction is equal to the communication delay time in the downstream direction.

The rendering unit RD generates rendering data of a reproduced scene using the sensor information. The sensor information includes sensor information acquired from the sensor information acquisition unit SI and sensor information acquired from the sensor information storage unit SIS. Both pieces of sensor information are input to the rendering unit RD of the receiver RE, but rendering is performed using different rendering methods for the respective pieces of sensor information.

For example, the rendering unit RD of the receiver RE uses the sensor information (hereinafter, referred to as the reception-side sensor information) acquired from the sensor information acquisition unit SI of the receiver RE to generate rendering data of a scene caused by a factor on the receiver RE side (such as a behavior of the user US on the receiver RE side). The rendering unit RD of the receiver RE uses the sensor information (hereinafter, referred to as the transmission-side sensor information) transmitted from the sensor information storage unit SIS to generate rendering data of a scene caused by a factor on the transmitter TR side (such as a behavior of the user US on the transmitter TR side).

In a case where rendering is performed using the transmission-side sensor information, the rendering unit RD of the receiver RE generates rendering data of a scene slightly ahead (in the future) in consideration of a communication delay. For example, the rendering unit RD generates rendering data of a subsequent scene on the receiver RE side, based on the sensor information of the current time acquired from the transmitter TR. The subsequent scene means a future scene expected to occur in the virtual space B of the receiver RE at a subsequent time after the current time. For example, the subsequent scene is set as a scene that occurs after a time later than the current time by the communication delay time.

When rendering is performed using the reception-side sensor information, the rendering unit RD of the receiver RE generates rendering data of the current scene on the receiver RE side, based on the sensor information of the current time directly acquired from the sensor information acquisition unit SI. The current scene means a scene expected to occur in the virtual space B of the receiver RE at the current time. The time information may be obtained from a clock in the computer of the receiver RE, or may be obtained from a clock in the server SV.

The reproduction unit RP transmits the rendering data to the reproduction system RS. The reproduction unit RP reproduces the rendering data via the projector PJR, the haptic device HD, and the like of the reproduction system RS.

As described above, the rendering unit RD varies the scheduled reproduction time of the scene to be rendered between the case of performing rendering using the transmission-side sensor information and the case of performing rendering using the reception-side sensor information. Therefore, the reproduction unit RP reproduces the rendering data according to the scheduled reproduction time of the scene. For example, for the rendering data generated using the transmission-side sensor information, the reproduction unit RP reproduces the rendering data in the virtual space B of the receiver RE at the subsequent time. For the rendering data generated using the reception-side sensor information, the reproduction unit RP reproduces the rendering data in the virtual space B of the receiver RE at the current time.

### [1-2. Generation and Reproduction of Rendering Data]

Hereinafter, specific examples of generation and reproduction of rendering data will be described. FIG. 4 is a diagram illustrating an example of an interaction using a ripple RL.

The user US on the transmitter TR side can recognize the virtual space B of the receiver RE through the monitor image CIM on the screen SCR. The image of the virtual space B (monitor image CIM) on the screen SCR is an image before the current time by the communication delay time. The rendering image RIM reproduced in the virtual space A of the transmitter TR is generated based on the sensor information of the current time (sensor information directly input from the sensor information acquisition unit SI of the transmitter TR to the rendering unit RD of the transmitter TR). The reproduction unit RP of the transmitter TR reproduces the wide-area scene WS extending from the transmitter TR side to the receiver RE side in the virtual space A of the transmitter TR by using the rendering image RIM and the monitor image CIM.

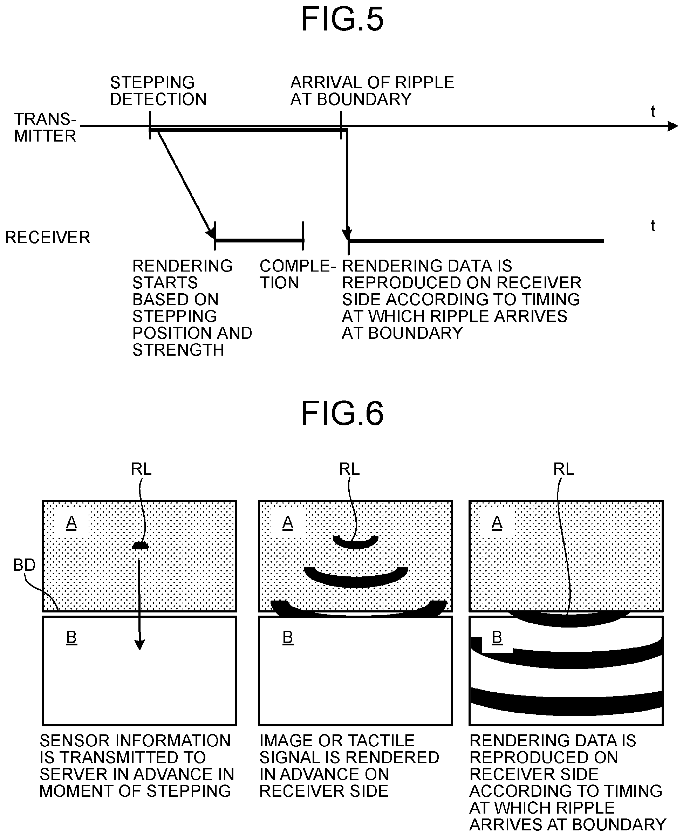

A boundary between the rendering image RIM and the monitor image CIM is a boundary BD between the virtual space A and the virtual space B (see FIG. 6). In the example of FIG. 4, a plane including the screen SCR is the boundary BD between the virtual space A and the virtual space B.

In the example of FIG. 4, an image of the ripple RL is presented as the rendering image RIM. The wide-area scene WS includes a scene where the ripple RL spreads from the transmitter TR side to the receiver RE side. The rendering unit RD of the receiver RE generates rendering data of a subsequent scene expected to occur after the time at which the ripple RL arrives at the boundary BD.

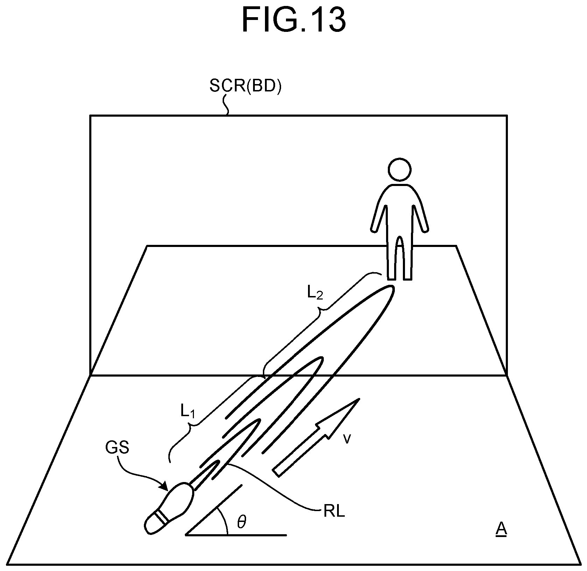

When the user US touches the ripple RL, a wave vibration is applied from the haptic device HD to a position on the floor surface where the user US is. As a result, the tactile sense of the wave is reproduced on the sole of the foot of the user US. By stepping on the floor surface, the user US can generate the ripple RL having an amplitude and a speed according to the stepping strength. Although the shape of the ripple RL is a circle, it is also possible to generate a ripple RL (see FIG. 13) having a major axis in a stepping direction by strongly performing stepping obliquely. In this case, the stepping direction is also detected as the sensor information by the pressure-sensitive sensor PS.

The position of the user US is detected using the pressure-sensitive sensor PS installed on the floor surface. However, as in the example of FIG. 4, the position of the user US may be detected using a distance sensor DS such as a time of flight (ToF) camera.

FIGS. 5 and 6 are diagrams illustrating an example of processing operations of the transmitter TR and the receiver RE.

The transmitter TR detects the operation of the user US stepping on the floor based on the detection information of the haptic device HD. Before the ripple RL caused by the stepping arrives at the boundary BD between the virtual space A and the virtual space B, the transmitter TR transmits sensor information regarding the stepping position and strength to the receiver RE via the server SV.

The receiver starts rendering based on the sensor information (transmission-side sensor information) received from the transmitter TR. A scene to be rendered is a future scene after the time when the ripple RL arrives at the boundary BD. The receiver RE completes rendering before the ripple RL arrives at the boundary BD. By the rendering processing, time-series image, sound, and tactile rendering data indicating a state in which the ripple RL propagates through the virtual space B on the receiver RE side is generated. The receiver RE reproduces the rendering data according to the timing at which the ripple RL arrives at the boundary BD.

The receiver RE expects a future scene (subsequent scene) after the ripple RL arrives at the boundary BD based on the transmission-side sensor information, and prepares rendering data of the subsequent scene in advance. The receiver RE reproduces the rendering data prepared in advance at timing at which the ripple RL arrives at the boundary BD. As a result, appropriate reproduction processing that is not affected by the communication delay is performed.

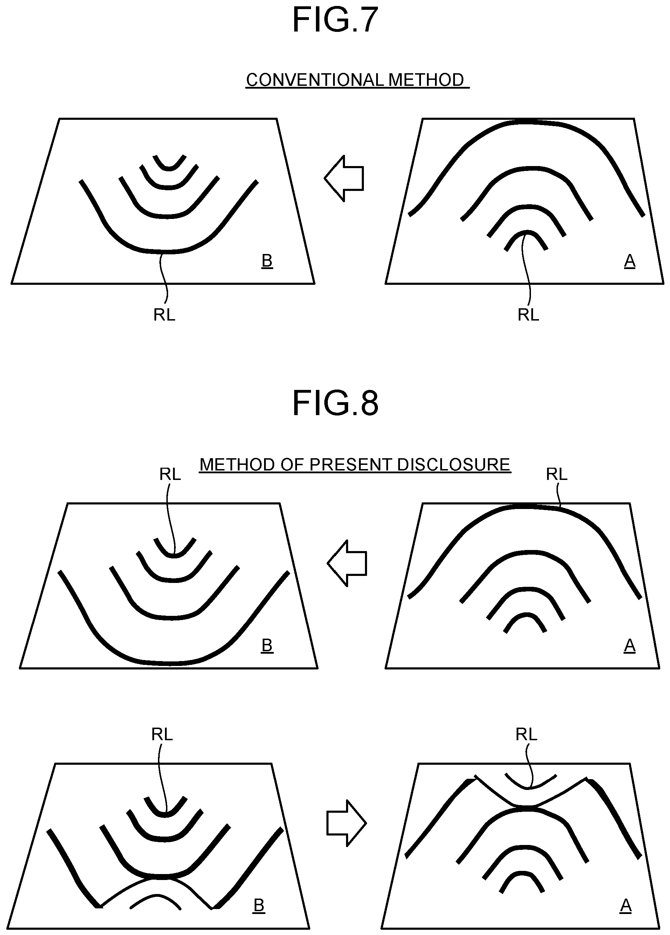

FIGS. 7 and 8 are diagrams for comparing a conventional method and a method of the present disclosure. FIG. 7 is a diagram illustrating the conventional method as a comparative example. FIG. 8 is a diagram illustrating the method of the present disclosure.

In the conventional method, rendering of the ripple RL in the virtual space B is started after the ripple RL arrives at the boundary BD. Since a communication delay occurs between the transmitter TR and the receiver RE, the ripple RL presented in the virtual space B is based on past sensor information (transmission-side sensor information) according to the communication delay (past ripple RL). The spread of the ripple RL viewed from the virtual space B side is smaller than the spread of the ripple RL viewed from the virtual space A side. A difference in size of the ripple RL is recognized as a deviation in reproduction timing.

In the method of the present disclosure, the ripple RL in the virtual space B that is rendered in advance is reproduced at timing at which the ripple RL enters the virtual space B. Therefore, the spread of the ripple RL viewed from the virtual space B side is equal to the spread of the ripple RL viewed from the virtual space A side, and the deviation in the reproduction timing does not occur (see the upper side of FIG. 8).

Similar processing can be performed even in a case where an interaction occurs between the ripple RL and the user US. For example, in the example of the lower side of FIG. 8, the ripple RL collides with the user US to generate a reflected wave. The receiver RE expects a future scene (subsequent scene) after the reflected wave arrives at the boundary BD based on information of a reflection position, and prepares rendering data of the subsequent scene in advance. The receiver RE reproduces the rendering data prepared in advance at timing at which the reflected wave arrives at the boundary BD. As a result, appropriate reproduction processing that is not affected by the communication delay is performed.

### [1-3. Information Processing Method]

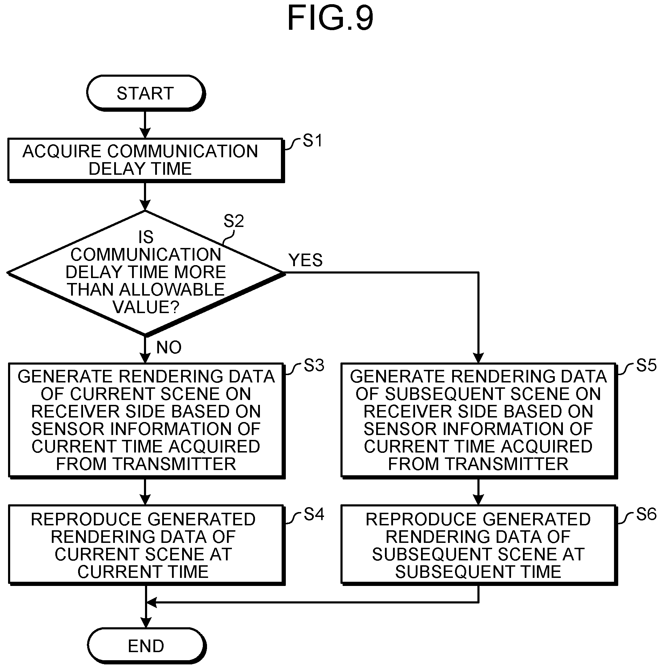

FIG. 9 is a diagram illustrating an example of a processing flow of the receiver RE.

The delay time acquisition unit DT acquires a communication delay time (Step S1), and determines whether or not the communication delay time is more than an allowable value (Step S2). The allowable value means a small communication delay time in which the deviation of the reproduction timing hardly causes a problem even in the conventional method illustrated in FIG. 7. The allowable value can be arbitrarily set by a system developer.

In a case where the communication delay time is more than the allowable value (Step S2: Yes), the rendering unit RD generates rendering data of a subsequent scene on the receiver RE side, based on the sensor information of the current time (transmission-side sensor information) acquired from the transmitter TR (Step S3). The subsequent scene is a future scene expected to occur in the virtual space B of the receiver RE at a subsequent time after the current time. The reproduction unit RP reproduces the generated rendering data of the subsequent scene at the subsequent time (Step S4).

In a case where the communication delay time is equal to or less than the allowable value (Step S2: No), the rendering unit RD generates rendering data of a current scene on the receiver RE side, based on the sensor information of the current time (transmission-side sensor information) acquired from the transmitter TR (Step S5). The current scene is a scene that is expected to occur in the virtual space B of the receiver RE at the current time. The reproduction unit RP reproduces the generated rendering data of the current scene at the current time (Step S6).

### [1-4. Effects]

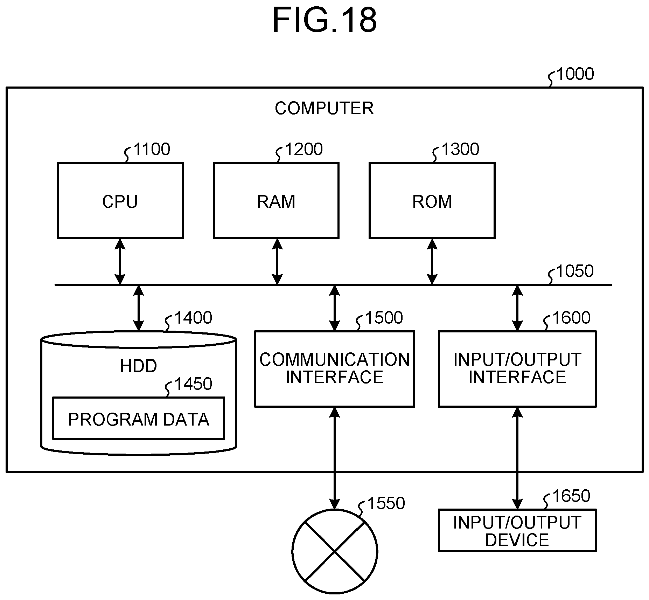

The information processing apparatus PD includes the rendering unit RD and the reproduction unit RP. The rendering unit RD generates the rendering data of the subsequent scene expected to occur in the virtual space B of the receiver RE at the subsequent time after the current time, based on the sensor information of the current time acquired from the transmitter TR. The reproduction unit RP reproduces the rendering data in the virtual space B of the receiver RE at the subsequent time. In the information processing method of the present disclosure, the processing of the information processing apparatus PD is executed by a computer 1000 (see FIG. 18). A program of the present disclosure causes the computer 1000 to implement the processing of the information processing apparatus PD.

According to this configuration, the rendering data of the subsequent scene that is not the current scene is generated from the sensor information of the current time acquired from the transmitter TR. Since the rendering data of the subsequent scene generated in advance is reproduced at the time scheduled to be reproduced in the subsequent scene, a deviation in reproduction timing on the receiver RE side due to the communication delay is suppressed.

The rendering data includes tactile data.

According to this configuration, a deviation in timing of tactile sense presentation between the transmitter and the receiver is suppressed. In the interaction using the tactile sense, the deviation in the reproduction timing is more easily detected as compared with the interaction using the image or the sound. The deviation in the reproduction timing leads to discomfort. By using the method of the present disclosure, an interaction with less discomfort can be performed.

The subsequent scene is set as a scene that occurs after the time later than the current time by the communication delay time.

According to this configuration, an appropriate scene that is not affected by the communication delay is reproduced on the receiver RE side.

The reproduction unit RP reproduces the wide-area scene WS extending from the transmitter TR side to the receiver RE side in the virtual space A of the transmitter TR by using the rendering image RIM generated based on the sensor information of the current time and the monitor image CIM before the current time by the communication delay time acquired from the receiver RE.

According to this configuration, the deviation of the image at the boundary between the rendering image RIM and the monitor image CIM is suppressed.

The wide-area scene WS includes a scene where the ripple RL spreads from the transmitter TR side to the receiver RE side. The rendering unit RD generates rendering data of a subsequent scene expected to occur after the time when the ripple RL arrives at the boundary BD.

According to this configuration, occurrence of a deviation in spread timing of the ripple RL between the transmitter TR side and the receiver RE side is suppressed.

Note that the effects described in the present specification are merely examples and are not limited, and other effects may be provided. In the above description, the receiver RE expects the time of arrival of the ripple RL at the boundary BD based on the sensor information of the current time of the transmitter TR. However, the expectation may be performed by the transmitter TR. In this case, the receiver RE may perform rendering based on expectation information received from the transmitter TR.

### [1-5. First Modification]

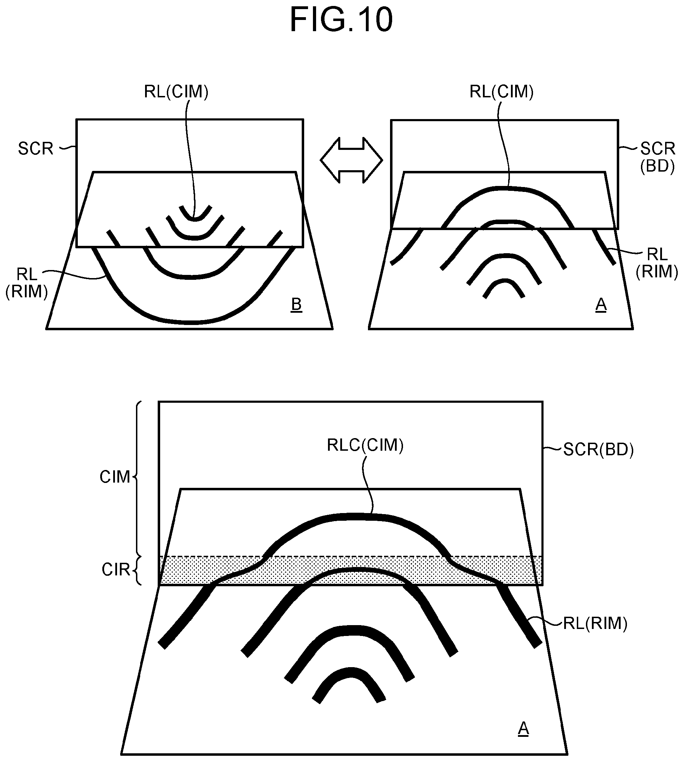

Hereinafter, modifications of the information processing performed on the receiver RE side will be described. FIG. 10 is an explanatory diagram of a first modification.

As described above, the rendering image RIM reproduced in the virtual space B on the receiver RE side is an appropriate reproduction image that is not affected by the communication delay. However, the monitor image CIM of the virtual space B where the rendering image RIM has been reproduced is transmitted to the transmitter TR via the server SV. The rendering image RIM of the virtual space B on the monitor image CIM becomes a past image by the communication delay time, and the spread of the ripple RL also decreases. For this reason, a deviation occurs between the rendering image RIM reproduced in the virtual space A of the transmitter TR and the rendering image RIM of the virtual space B on the monitor image CIM (see the upper side of FIG. 10).

Therefore, the reproduction unit RP corrects an image of a portion adjacent to the boundary BD of the monitor image CIM such that the discontinuity of the image at the boundary BD between the rendering image RIM and the monitor image CIM is eliminated. In the example of FIG. 10, in the monitor image CIM, an image region having a predetermined width constituting the lower end portion of the screen SCR is replaced with a corrected image CIR. According to this configuration, a high-quality wide-area scene WS in which the rendering image RIM and the monitor image CIM are smoothly connected is reproduced.

### [1-6. Second Modification]

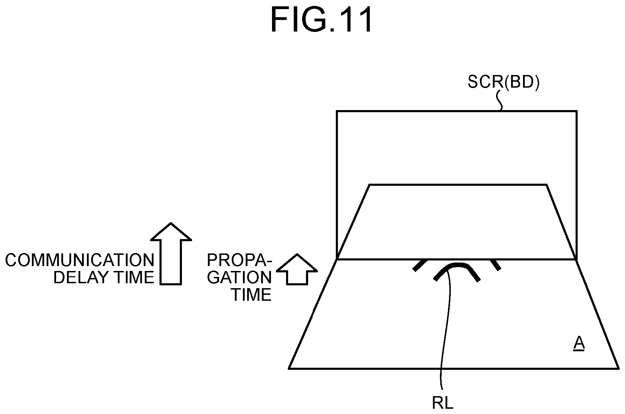

FIG. 11 is an explanatory diagram of a second modification.

In the example of FIG. 11, the stepping operation for generating the ripple RL is performed in the vicinity of the screen SCR. Depending on the stepping position of the user US, a propagation time until the ripple RL arrives at the boundary BD may be shorter than the communication delay time. In this case, the receiver RE cannot complete the rendering before the ripple RL arrives at the boundary BD. For this reason, a deviation in the reproduction timing occurs between the transmitter TR side and the receiver RE side.

In order to solve such a problem, in the present modification, the propagation speed of the ripple RL is adjusted on the transmitter TR side. When the propagation time of the ripple RL from the ripple source (stepping position) to the boundary BD is shorter than the communication delay time, the reproduction unit RP of the transmitter TR adjusts the propagation speed of the ripple RL such that the propagation time is equal to or more than the communication delay time. According to this configuration, occurrence of a deviation in spread timing of the ripple RL between the transmitter TR side and the receiver RE side is suppressed.

### [1-7. Third Modification]

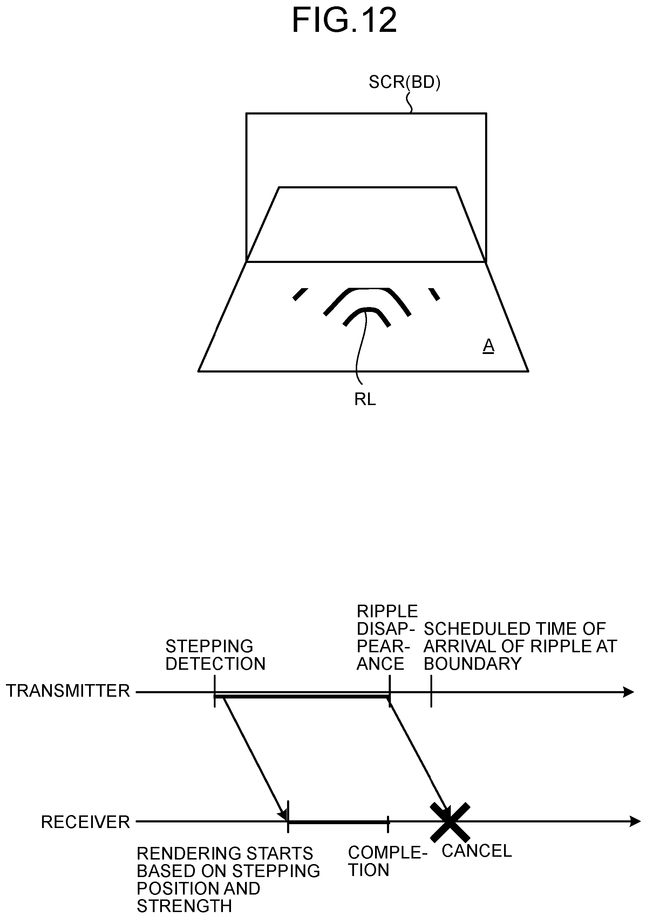

FIG. 12 is an explanatory diagram of a third modification.

In the example of FIG. 12, a situation is illustrated in which stepping is detected on the transmitter TR side and the sensor information is transmitted to the receiver RE, but the ripple RL disappears on the way. In the receiver RE, rendering is completed based on the sensor information received from the transmitter TR. If no action is taken, the rendering data is erroneously reproduced on the receiver RE side at the scheduled arrival time of the ripple RL to be reproduced.

In order to solve this problem, in the present modification, reproduction stop processing of the rendering data is performed based on disappearance information of the ripple RL. When it is detected that the ripple RL has disappeared on the way, the transmitter TR transmits information (disappearance information) indicating that the ripple RL has disappeared to the receiver RE. When the ripple RL disappears before the ripple RL arrives at the boundary BD, the reproduction unit RP of the receiver RE stops reproducing the ripple RL on the receiver RE side based on the rendering data. According to this configuration, the image of the ripple RL scheduled to be reproduced is prevented from being erroneously reproduced on the receiver RE side.

### [1-8. Fourth Modification]

FIG. 13 is an explanatory diagram of a fourth modification.

Although the shape of the ripple RL is a circle, it is also possible to generate a ripple RL having a major axis in a stepping direction by strongly performing stepping obliquely. In this case, the rendering unit RD determines timing at which the sensor information should be acquired from the transmitter TR and start timing of the rendering processing for generating the rendering data, based on a positional relation between a ripple source GS and the boundary BD and a propagation direction of the ripple RL (a major axis direction). According to this configuration, rendering can be performed according to the timing at which the ripple RL arrives at the boundary BD.

In the example of FIG. 13, the propagation direction of the ripple RL (the direction of the major axis) is determined according to an angle of the foot at the time of stepping on and order of the stepped pressure-sensitive sensors PS. A time from generation of the ripple RL to arrival of the ripple RL at the user US on the receiver RE side depends on an angle θ of the stepping direction, a distance L1 from the ripple source GS to the boundary BD, a distance L2 from the boundary BD to the user US on the receiver RE side, and a propagation speed v of the ripple RL. Therefore, in consideration of these pieces of information and a communication delay, it is possible to determine how far in advance sensor information should be transmitted and how far in advance rendering should be started.

### [2. Second Embodiment]

FIG. 14 is a diagram illustrating a remote communication system according to a second embodiment.

In the present embodiment, a tactile sense when a virtual object VOB is touched is reproduced by a glove-type haptic device HD. Rendering data of the virtual object VOB is reproduced by an image reproduction device such as a head mounted display or augmented reality (AR) glasses. A user US can interact with a user US of another reproduction system RS via the virtual object VOB.

### [2-1. Generation and Reproduction of Rendering Data]

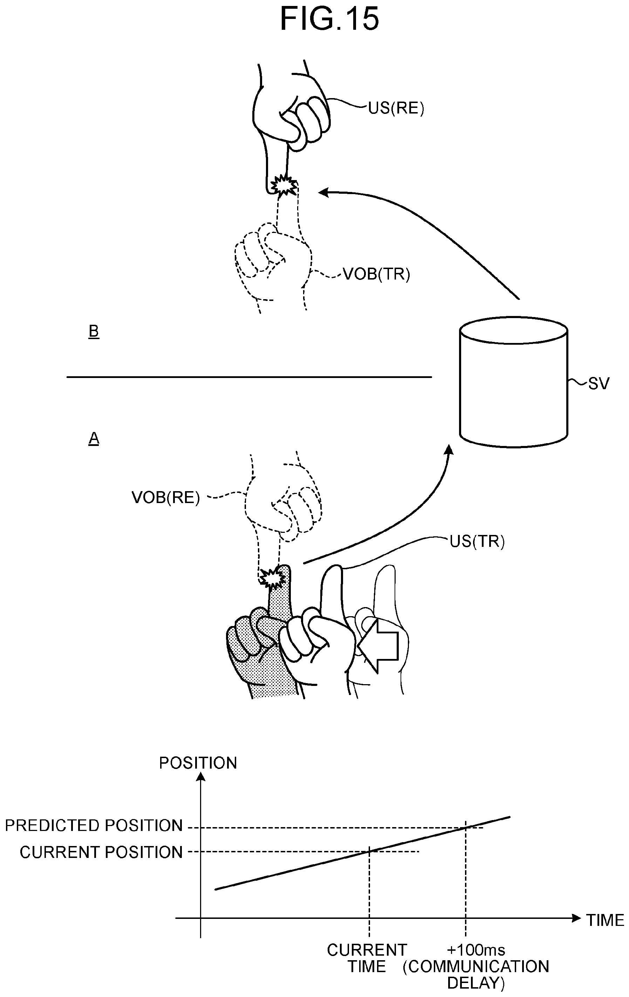

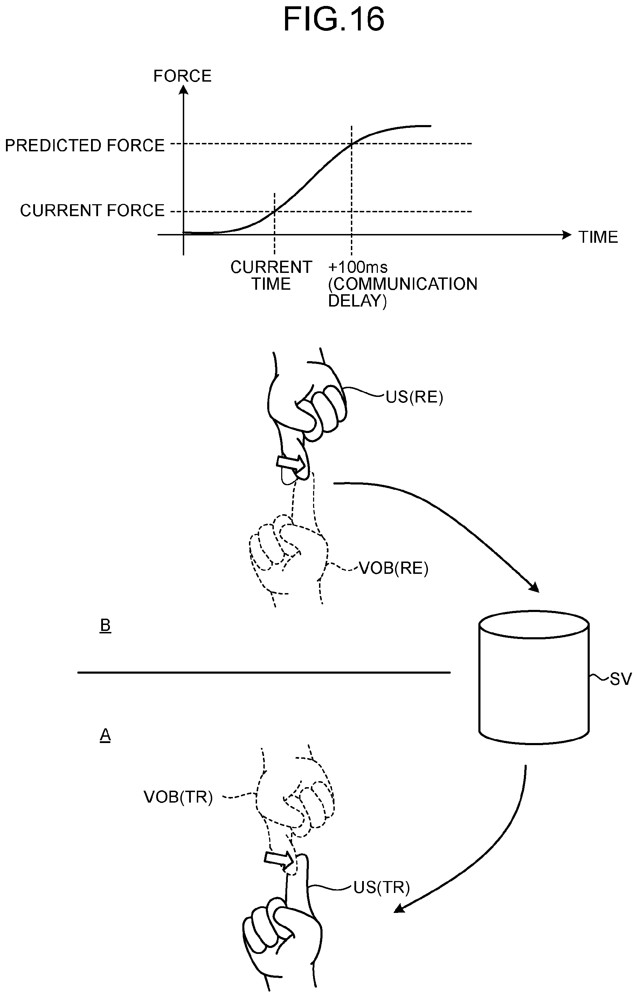

FIGS. 15 and 16 are explanatory diagrams of processing of generating and reproducing rendering data.

In the examples of FIGS. 15 and 16, the virtual object VOB is a hand of the user US performing the interaction. A transmitter TR transmits information regarding a position and a movement speed of the hand of the user US of the transmitter TR as sensor information. A receiver RE expects how the position and the movement speed of the hand of the user US of the transmitter TR change at a time later than a current time by using the sensor information received from the transmitter TR. The receiver RE generates rendering data regarding an image and a tactile sense of the hand of the user US of the transmitter TR expected as rendering data of a subsequent scene. The timing and intensity at which the tactile sense is generated are obtained from the timing at which the hands of the users US contact each other and the movement speed of the hands at the time of contact.

A communication delay time is, for example, 100 ms. The receiver RE receives the sensor information 100 ms after the transmitter TR starts to transmit the sensor information of the current time. The receiver RE generates rendering data of a subsequent scene expected to occur in the virtual space B of the receiver RE at a time later than the current time by the communication delay time, based on the sensor information of the current time acquired from the transmitter TR. As a result, in real time, the hand of the transmitter TR is displayed at the same position in both the virtual space A and the virtual space B, and a deviation in timing of tactile sense presentation does not occur.

In the above description, the position and the movement speed of the hand of the user US of the transmitter TR at the subsequent time has been expected by the receiver RE. However, the expectation may be performed by the transmitter TR. In this case, the receiver RE may perform rendering based on expectation information received from the transmitter TR.

### [2-2. Fifth Modification]

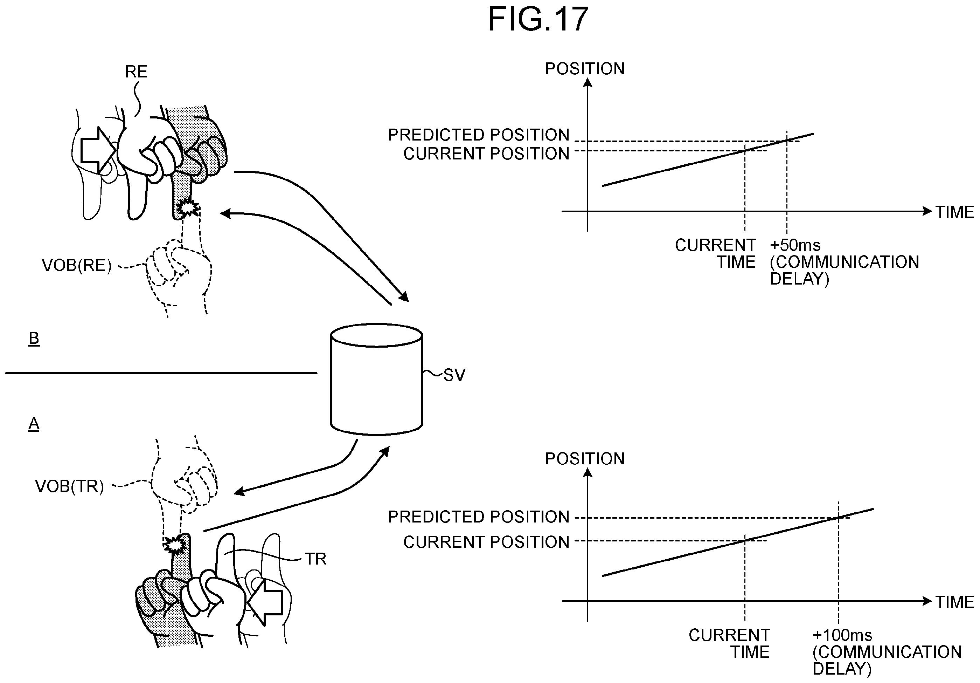

FIG. 17 is an explanatory diagram of a fifth modification.

In the above embodiment, the description has been given assuming that the communication delay speeds in the upstream direction and the downstream direction are the same. However, when the communication delay time is different between the upstream direction and the downstream direction, it may be determined how far in the future position information is expected according to each communication delay speed. For example, in a case where the communication delay time in the uplink direction is 100 ms, the position and the movement speed after 100 ms from the sensor information of the current time can be expected, and rendering can be performed based on the expectation information. In a case where the communication delay time in the downstream direction is 50 ms, the position and the movement speed after 50 ms from the sensor information of the current time can be expected, and rendering can be performed based on the expectation information.

### [3. Hardware Configuration Example]

FIG. 18 is a diagram illustrating an example of a hardware configuration of the information processing apparatus PD.

The information processing of the information processing apparatus PD is implemented by, for example, a computer 1000. The computer 1000 includes a central processing unit (CPU) 1100, a random access memory (RAM) 1200, a read only memory (ROM) 1300, a hard disk drive (HDD) 1400, a communication interface 1500, and an input/output interface 1600. Each unit of the computer 1000 is connected by a bus 1050.

The CPU 1100 operates based on a program (program data 1450) stored in the ROM 1300 or the HDD 1400, and controls each unit. For example, the CPU 1100 develops a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 starts, a program depending on hardware of the computer 1000, and the like.

The HDD 1400 is a non-transitory computer-readable recording medium that non-transiently records a program executed by the CPU 1100, data used by the program, and the like. Specifically, the HDD 1400 is a recording medium that records the information processing program according to the embodiment as an example of the program data 1450.

The communication interface 1500 is an interface for connecting the computer 1000 to an external network 1550 (for example, the Internet). For example, the CPU 1100 receives data from another device or transmits data generated by the CPU 1100 to another device via the communication interface 1500.

The input/output interface 1600 is an interface for connecting an input/output device 1650 and the computer 1000. For example, the CPU 1100 receives data from an input device such as a keyboard or a mouse via the input/output interface 1600. In addition, the CPU 1100 transmits data to an output device such as a display device, a speaker, or a printer via the input/output interface 1600. In addition, the input/output interface 1600 may function as a media interface that reads a program or the like recorded in a predetermined recording medium (media). The media are, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, and the like.

For example, in a case where the computer 1000 functions as the information processing apparatus PD according to the embodiment, the CPU 1100 of the computer 1000 executes the information processing program loaded on the RAM1200 to implement a function of each unit described above. In addition, the HDD 1400 stores an information processing program, various models, and various data according to the present disclosure. Note that the CPU 1100 reads the program data 1450 from the HDD 1400 and executes the program data, but as another example, these programs may be acquired from another device via the external network 1550.

### [Supplementary Note]

Note that the present technology can also take the following configurations.
(1) An information processing apparatus comprising:
   a rendering unit that generates, based on sensor information of a current time acquired from a transmitter, rendering data of a subsequent scene expected to occur in a virtual space of a receiver at a subsequent time after the current time; and
   a reproduction unit that reproduces the rendering data in the virtual space of the receiver at the subsequent time.
(2) The information processing apparatus according to (1), wherein
   the rendering data includes tactile data.
(3) The information processing apparatus according to (1) or (2), wherein
   the subsequent scene is set as a scene that occurs after a time later than the current time by a communication delay time.
(4) The information processing apparatus according to (3), wherein
   the reproduction unit reproduces a wide-area scene extending from the transmitter side to the receiver side in a virtual space of the transmitter by using a rendering image generated based on the sensor information of the current time and a monitor image before the current time by the communication delay time acquired from the receiver.
(5) The information processing apparatus according to (4), wherein
   the reproduction unit corrects a portion of the monitor image adjacent to a boundary between the rendering image and the monitor image so as to eliminate image discontinuity at the boundary.
(6) The information processing apparatus according to (5), wherein
   the wide-area scene includes a scene in which a ripple spreads from the transmitter side to the receiver side, and
   the rendering unit generates rendering data of the subsequent scene expected to occur after a time when the ripple arrives at the boundary.
(7) The information processing apparatus according to (6), wherein
   when a propagation time of the ripple from a ripple source to the boundary is shorter than the communication delay time, the reproduction unit adjusts a propagation speed of the ripple such that the propagation time is equal to or more than the communication delay time.
(8) The information processing apparatus according to (6), wherein
   the reproduction unit stops reproduction of the ripple on the receiver side based on the rendering data, when the ripple disappears before the ripple arrives at the boundary.
(9) The information processing apparatus according to (6), wherein
   the rendering unit determines timing at which the sensor information is to be acquired from the transmitter and start timing of rendering processing for generating the rendering data, based on a positional relation between a ripple source and the boundary and a propagation direction of the ripple.
(10) An information processing method executed by a computer, comprising:
   generating, based on sensor information of a current time acquired from a transmitter, rendering data of a subsequent scene expected to occur in a virtual space of a receiver at a subsequent time after the current time; and
   reproducing the rendering data in the virtual space of the receiver at the subsequent time.
(11) A program for causing a computer to implement:
   generating, based on sensor information of a current time acquired from a transmitter, rendering data of a subsequent scene expected to occur in a virtual space of a receiver at a subsequent time after the current time; and
   reproducing the rendering data in the virtual space of the receiver at the subsequent time.

### Reference Signs List

- BD: BOUNDARY
- CIM: MONITOR IMAGE
- GS: RIPPLE SOURCE
- PD: INFORMATION PROCESSING APPARATUS
- RD: RENDERING UNIT
- RE: RECEIVER
- RIM: RENDERING IMAGE
- RL: RIPPLE
- RP: REPRODUCTION UNIT
- TR: TRANSMITTER
- WS: WIDE-AREA SCENE

## Claims

1. An information processing apparatus comprising:
a rendering unit that generates, based on sensor information of a current time acquired from a transmitter, rendering data of a subsequent scene expected to occur in a virtual space of a receiver at a subsequent time after the current time; and
a reproduction unit that reproduces the rendering data in the virtual space of the receiver at the subsequent time.

2. The information processing apparatus according to claim 1, wherein
the rendering data includes tactile data.

3. The information processing apparatus according to claim 1, wherein
the subsequent scene is set as a scene that occurs after a time later than the current time by a communication delay time.

4. The information processing apparatus according to claim 3, wherein
the reproduction unit reproduces a wide-area scene extending from the transmitter side to the receiver side in a virtual space of the transmitter by using a rendering image generated based on the sensor information of the current time and a monitor image before the current time by the communication delay time acquired from the receiver.

5. The information processing apparatus according to claim 4, wherein
the reproduction unit corrects a portion of the monitor image adjacent to a boundary between the rendering image and the monitor image so as to eliminate image discontinuity at the boundary.

6. The information processing apparatus according to claim 5, wherein
the wide-area scene includes a scene in which a ripple spreads from the transmitter side to the receiver side, and
the rendering unit generates rendering data of the subsequent scene expected to occur after a time when the ripple arrives at the boundary.

7. The information processing apparatus according to claim 6, wherein
when a propagation time of the ripple from a ripple source to the boundary is shorter than the communication delay time, the reproduction unit adjusts a propagation speed of the ripple such that the propagation time is equal to or more than the communication delay time.

8. The information processing apparatus according to claim 6, wherein
the reproduction unit stops reproduction of the ripple on the receiver side based on the rendering data, when the ripple disappears before the ripple arrives at the boundary.

9. The information processing apparatus according to claim 6, wherein
the rendering unit determines timing at which the sensor information is to be acquired from the transmitter and start timing of rendering processing for generating the rendering data, based on a positional relation between a ripple source and the boundary and a propagation direction of the ripple.

10. An information processing method executed by a computer, comprising:
generating, based on sensor information of a current time acquired from a transmitter, rendering data of a subsequent scene expected to occur in a virtual space of a receiver at a subsequent time after the current time; and
reproducing the rendering data in the virtual space of the receiver at the subsequent time.

11. A program for causing a computer to implement:
generating, based on sensor information of a current time acquired from a transmitter, rendering data of a subsequent scene expected to occur in a virtual space of a receiver at a subsequent time after the current time; and
reproducing the rendering data in the virtual space of the receiver at the subsequent time.
